**Europäisches Patentamt**

**European Patent Office**

**Office européen des brevets**

(19)

(11) Numéro de publication: **0 172 087 B1**

(12)

# FASCICULE DE BREVET EUROPEEN

(45) Date de publication du fascicule du brevet:
07.10.87

(51) Int. Cl.⁴: **F 24 H 6/00**

(21) Numéro de dépôt: **85401512.0**

(22) Date de dépôt: **22.07.85**

(54) **Appareil de production d'air chaud et d'eau chaude sanitaire.**

(30) Priorité: **25.07.84 FR 8411816**

(43) Date de publication de la demande:
**19.02.86 Bulletin 86/8**

(45) Mention de la délivrance du brevet:
**07.10.87 Bulletin 87/41**

(84) Etats contractants désignés:
**AT BE CH DE FR GB IT LI LU NL SE**

(56) Documents cités:
**EP - A - 0 021 469**
**DE - A - 2 742 073**
**DE - B - 1 114 997**
**GB - A - 917 010**

(73) Titulaire: **GAZ DE FRANCE, 23, rue Philibert Delorme, F-75017 Paris (FR)**

(72) Inventeur: **Casier, Yves, 12 Allée du Bon Puits Rue Gambetta, F-95120 Ermont (FR)**
Inventeur: **Cassagne, Philippe, 18 rue Darcet, F-75017 Paris (FR)**
Inventeur: **Gicquel, Sylvain Jean Alexandre, 13 Parc de la Métairie, F-93200 Saint Denis (FR)**
Inventeur: **Junet, Roland Pierre Julien, 15 bis rue Jules Romain, F-75019 Paris (FR)**

(74) Mandataire: **Durand, Yves Armand Louis et al, Cabinet Z. Weinstein 20, Avenue de Friedland, F-75008 Paris (FR)**

## Description

La présente invention a essentiellement pour objet un appareil pour la production d'air chaud et d'eau chaude sanitaire, destiné à équiper un logement quelconque.

On a déjà proposé de réaliser à l'aide d'un seul et même appareil équipé d'un brûleur, un chauffage d'air ventilé traversant l'appareil et un réchauffage de l'eau contenue dans un récipient logé dans cet appareil.

De tels appareils sont par exemple décrits dans le document DE-A-2 742 073 ou GB-A-917 010. Mais la structure de ces appareils est telle qu'il n'y a pas une indépendance complète entre les circuits de réchauffage de l'air ventilé et de l'eau et qu'on ne peut donc pas contrôler efficacement le réchauffage s'effectuant dans les deux circuits.

Aussi, la présente invention a pour but de remédier à ces inconvénients en proposant un nouveau type d'appareil de chauffage à air chaud permettant de produire également de l'eau chaude sanitaire et présentant une structure permettant un réchauffage indépendant et donc parfaitement contrôlable de l'eau et de l'air ventilé.

A cet effet, l'invention a pour objet un appareil de production d'air chaud et d'eau chaude sanitaire, du type comportant au moins un brûleur réalisant le chauffage d'air ventilé passant au travers d'une enveloppe et/ou le réchauffage de l'eau par échange thermique avec les produits de combustion du brûleur, caractérisé en ce qu'il comprend une partie centrale indépendante thermiquement isolée de l'enveloppe et réservée à l'eau sanitaire, cette partie centrale d'une part contenant au moins un échangeur en communication avec les produits de combustion du brûleur situé en partie basse de l'enveloppe, et d'autre part délimitant avec l'enveloppe un espace annulaire qui entoure complètement et de manière thermiquement indépendante la partie centrale, qui est relié audit brûleur et qui contient au moins un autre échangeur pour la production d'air chaud.

Suivant une autre caractéristique de cet appareil, la partie centrale comprend un premier échangeur traversant une cuve de stockage de l'eau sanitaire et un pré-échangeur disposé sur un circuit d'arrivée d'eau froide situé dans une chambre au-desssus de ladite cuve.

On précisera encore ici que le premier échangeur est constitué par des conduites débouchant d'une part en partie basse de la cuve vers un espace collecteur des produits de combustion émanant du brûleur, et débouchant d'autre part en partie haute de la cuve dans la chambre précitée en dessous d'un collecteur de condensats, lui-même agencé en dessous du pré-échangeur associé au circuit d'arrivée d'eau froide.

Suivant encore une autre caractéristique de l'invention, l'échangeur de production d'air chaud est constitué par une paroi à ailettes agencée concentriquement autour de la partie centrale et formant avec celle-ci un premier passage annulaire pour les produits de combustion émanant du brûleur tandis qu'un deuxième passage annulaire est formé entre cette paroi et l'enveloppe précitée pour l'air soufflé par au moins un ventilateur monté dans ce deuxième passage.

La paroi précitée pourra avantageusement contenir une certaine masse de liquide pour procurer une modulation sur la température de sortie de l'air chaud produit par l'appareil.

Selon encore une autre caractéristique de l'invention, les produits de combustion émanant du brûleur sont guidés par un conduit débouchant dans l'espace collecteur sous la cuve précitée et muni d'un volet d'orientation des produits de combustion soit vers le premier échangeur précité, soit vers le premier passage précité.

L'appareil selon l'invention est encore caractérisé par une première ouverture ménagée en partie haute de la chambre précitée et par une deuxième ouverture ménagée dans le premier passage précité, cette deuxième ouverture étant en alignement axial avec la première et se prolongeant par une cheminée ou analogue équipée d'au moins un ventilateur d'extraction des produits de combustion passant au travers de la partie centrale et du premier passage précités.

Selon encore une autre caractéristique, le collecteur des condensats dans la chambre précitée communique par une conduite d'évacuation avec l'extérieur de l'appareil, de même qu'une autre conduite d'évacuation des condensats communique avec le deuxième passage précité en partie basse de l'enveloppe.

On ajoutera encore ici que le circuit d'arrivée d'eau froide débouche dans la cuve de stockage qui comporte un aquastat ainsi qu'une conduite de départ d'eau chaude sanitaire vers une salle d'eau par exemple.

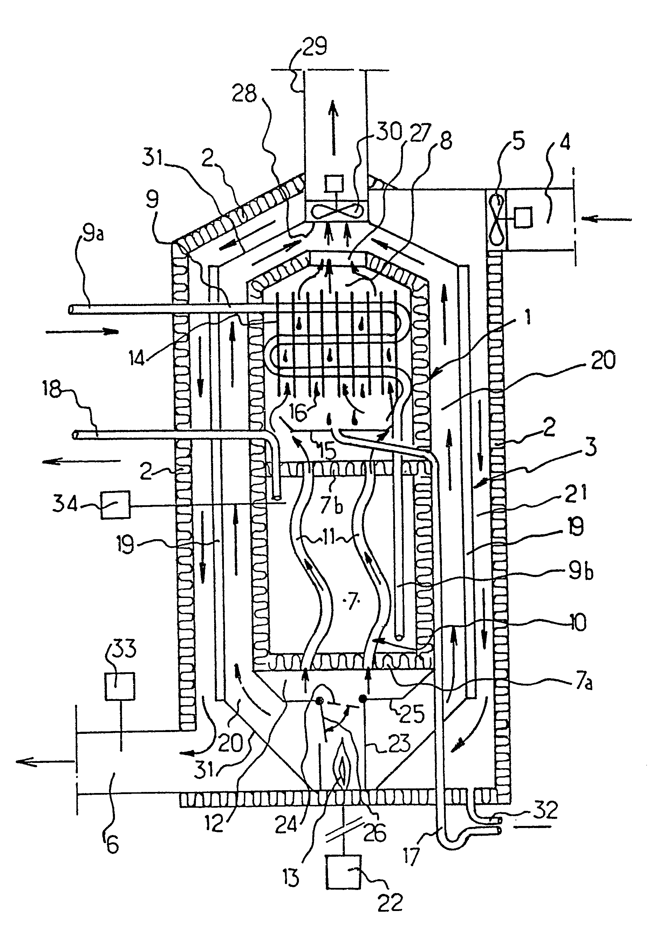

Mais d'autres caractéristiques et avantages de l'invention apparaîtront mieux dans la description détaillée qui suit et se réfère au dessin unique annexé, donné uniquement à titre d'exemple, et montrant schématiquement en élévation et en coupe axiale un appareil générateur d'air chaud et d'eau chaude sanitaire, conforme aux principes de l'invention.

En se reportant au dessin, on voit que cet appareil comprend essentiellement un partie centrale et par exemple cylindrique (1) réservée au chauffage et au réchauffage de l'eau sanitaire, ainsi qu'une enveloppe (2) entourant complètement la partie centrale (1) et délimitant avec elle un espace annulaire (3) dans lequel est chauffé l'air repris en (4) dans un local quelconque et soufflé au moyen d'un ventilateur (5) pour sortir par la conduite de départ (6).

La partie centrale (1) constitue un ensemble thermiquement isolé de l'enveloppe périphérique (2) qui elle-même est isolée vis-à-vis de l'extérieur, comme on le voit bien sur la figure.

Suivant l'exemple de réalisation représenté, la partie centrale (1) assurant la production d'eau chaude sanitaire comprend une cuve (7) de stockage de l'eau chaude au-dessus de laquelle est située une chambre ou analogue (8) dans laquelle passe un circuit (9) d'eau froide qui arrive en (9a) et qui débouche en (9b) dans la cuve (7).

La cuve (7) est traversée par un premier échangeur (10) qui, plus précisément, comprend des conduites ou tubes sinueux (11) débouchant d'une part en partie basse (7a) de la cuve (7) vers un espace collecteur (12) des produits de combustion émanant d'un brûleur (13), et débouchant d'autre part en partie haute (7b) de la cuve (7) dans la chambre (8) qui contient le circuit d'arrivée d'eau froide (9). A ce circuit (9) est associé un pré-échangeur (14), et en dessous de ce pré-échangeur est disposé un collecteur (15) pour les condensats (16) qui sont évacués par une conduite (17) hors de l'enveloppe calorifugée (2). On a montré en (18) une conduite de départ de l'eau chaude sanitaire communiquant avec la cuve d'eau stockée (7).

L'espace annulaire (3) réservé à la production d'air chaud renferme un échangeur (19) constitué par une paroi à ailettes, cette paroi étant agencée concentriquement autour de la partie centrale (1). Ainsi, la paroi d'échange (19) forme entre elle et la périphérie extérieure de la partie centrale (1) un premier passage annulaire (20) pour les produits de combustion émanant du brûleur (13), tandis qu'un deuxième passage annulaire (21) est formé entre la paroi (3) et l'enveloppe (2) pour la circulation de l'air ventilé et distribué en (6) après chauffage par échange thermique à contre-courant avec les produits de combustion dans le premier passage (20), comme cela est matérialisé par des flèches sur le dessin.

Le brûleur (13) est, comme cela est connu en soi, relié à un thermostat d'ambiance (22). Les produits de combustion de ce brûleur sont canalisés dans un conduit (23) débouchant en (24) dans l'espace collecteur (12) constitué par une paroi ou tôle (25) associée à la partie basse (7a) de la cuve d'eau stockée (7). Le conduit (23) est équipé d'un volet (26) permettant l'orientation des produits de combustion soit vers l'échangeur (10), soit vers le passage annulaire (20).

En partie haute de la chambre (8) est prévue une ouverture (27) assurant l'évacuation des produits de combustion traversant l'échangeur (10) et le pré-échangeur (14) associé au circuit d'arrivée d'eau froide (9). Une ouverture (28), en alignement axial avec l'ouverture (27), est également ménagée dans le passage (20) pour assurer l'évacuation des gaz de combustion ayant servi à chauffer l'air soufflé. Cette ouverture (28) constitue l'extrémité d'une cheminée (29) équipée d'un ventilateur d'extraction (30).

On précisera ici que les passages annulaires (20, 21) séparés par la paroi d'échange (3) sont fermés en partie haute et en partie basse à l'aide de tôles (31) par exemple, l'orifice (28) mentionné précédemment étant ménagé dans la tôle (31) en partie haute et se prolongeant par la cheminée (29).

On a montré en (32) un conduit d'évacuation des condensats produits dans le passage (21) pour l'air soufflé et chauffé. Enfin, un airstat (33) est prévu sur le départ (6) de l'air chaud, et un aquastat (34) est monté sur la cuve (7) de stockage d'eau chaude.

Le fonctionnement de l'appareil de chauffage selon l'invention se déduit immédiatement de la description qui précède.

La production d'eau chaude sanitaire est semi-instantanée. L'aquastat (34) maintient la température de l'eau entre environ 55 et 65°C. Et lorsque la température atteint 55°C, l'aquastat commande la mise en route du brûleur (13). Les gaz de combustion traversent les conduites (11) de l'échangeur (10) puis, à la sortie de cet échangeur, les gaz de combustion sont réutilisés et passent au travers du pré-échangeur (14) disposé à contre-courant sur l'arrivée d'eau froide (9), puis les gaz de combustion sont finalement évacués par la cheminée (29). On notera ici que le pré-échangeur à plaques (14) améliore de façon importante le rendement en eau chaude sanitaire en raison notamment de la condensation lors des puisages.

On notera ici que la cuve (7) d'eau stockée peut avoir une contenance d'environ 30 litres, que la surface d'échange du pré-échangeur (14) est de l'ordre de quelques mètres carrés et que le brûleur (13) a une puissance utile de l'ordre de 18 kilowatts.

Mais on pourrait parfaitement, sans sortir du cadre de l'invention, prévoir simplement pour la partie centrale (1) une simple cuve de stockage d'eau d'une capacité comprise entre environ 80 et 100 litres, tandis que le brûleur (22) présenterait une puissance utile de l'ordre de 14 kilowatts.

Enfin, en ce qui concerne la production d'eau chaude, on notera que le volet (26) assure la priorité sur cette production. Quant à la production d'air chaud, elle s'effectue par le passage (21), comme on l'a expliqué précédemment, c'est-à-dire par échagne thermique à contre-courant avec les produits de combustion circulant dans le passage (20) et évacués par la cheminée (29) qui sert aussi à évacuer les gaz de combustion pour le réchauffage de l'eau sanitaire.

La régulation de la fonction chauffage qui, encore une fois, est indépendante de la production d'eau chaude sanitaire, s'effectue au moyen du thermostat d'ambiance (22) et de l'airstat (33).

Le thermostat (22) situé dans le local le plus défavorisé thermiquement du logement commande en tout ou rien le brûleur (13), ce qui assure le chauffage par de l'air soufflé à environ 40°C. Et le ventilateur (5) de soufflage de l'air chaud est commandé par l'airstat (33), et s'arrête si l'air atteint une température minimale, par exemple de l'ordre de 25°C.

On se trouve donc ici en présence d'une régulation en tout ou rien sur le débit, mais on peut parfaitement envisager de produire de l'air chaud avec une certaine modulation en température.

A cet effet, on pourrait utiliser un brûleur modulant pour le chauffage, c'est-à-dire par exemple un brûleur d'une puissance utile maximale de l'ordre de 6 kilowatts et modulable jusqu'à 2 kilowatts, ce brûleur étant commandé par le thermostat d'ambiance. Dans ce cas-là, on utiliserait un deuxième brûleur d'une puissance utile comprise entre environ 14 et 18 kilowatts qui serait spécifiquement destiné à chauffer l'eau sanitaire.

Ainsi, avec un brûleur modulant pour le chauffage, la température de l'air soufflé serait modulée et pourrait être ajustée avec précision en fonction des besoins, selon les valeurs comprises entre environ 40 et 25° C pour un même débit de soufflage.

Cependant, pour éviter la mise en œuvre de deux brûleurs comme expliqué ci-dessus, et également pour remédier à certaines difficultés liées à l'emploi d'un brûleur modulant, la modulation en température de l'air chaud soufflé peut être obtenue tout simplement en augmentant l'inertie de l'échangeur de chaleur (19). Par exemple, cette inertie pourrait être augmentée en incorporant à l'échangeur précité une certaine masse de liquide tel que de l'eau par exemple.

Ainsi, on pourrait obtenir une modulation importante en température à la sortie (6) de l'air chaud, ce qui procurerait une amélioration du confort et également une meilleure récupération des apports solaires et internes, puisque le débit moyen d'air recyclé serait supérieur, pour une même fourniture de chaleur. Enfin, on ajoutera ici que grâce à la condensation qui se produit aussi bien en chauffage qu'en eau chaude sanitaire, on obtiendra de hauts rendements.

Bien entendu, l'invention n'est nullement limitée au mode de réalisation décrit qui n'a été donné qu'à titre d'exemple.

Ainsi, au lieu de prévoir les deux fonctions chauffage et eau chaude sanitaire emboîtées, comme cela est représenté sur le dessin, on pourrait parfaitement, sans sortir du cadre de l'invention, disposer ces deux fonctions dans deux caissons adjacents, le principe de l'invention reposant essentiellement sur le fait que les deux fonctions en question sont réunies dans un seul appareil et sont assurées d'une manière indépendante l'une de l'autre.

## Revendications

1. Appareil de production d'air chaud et d'eau chaude sanitaire, du type comportant au moins un brûleur (13) réalisant le chauffage d'air ventilé passant au travers d'une enveloppe (2) et/ou le réchauffage de l'eau par échange thermique avec les produits de combustion du brûleur (13), caractérisé en ce qu'il comprend une partie centrale indépendante (1) thermiquement isolée de l'enveloppe (2) et réservée à l'eau sanitaire, cette partie centrale d'une part contenant au moins un échangeur (10, 14), en communication avec les produits de combustion du brûleur situé en partie basse de l'enveloppe (2) et, d'autre part, délimitant avec l'enveloppe (2) un espace annulaire (3) qui entoure complètement et de manière thermiquement indépendante la partie centrale (1), qui est relié audit brûleur (13) et qui contient au moins un échangeur (19) pour la production d'air chaud.

2. Appareil selon la revendication 1, caractérisé en ce que la partie centrale (1) comprend un premier échangeur (10) traversant une cuve (7) de stockage de l'eau sanitaire et un pré-échangeur (14) disposé sur un circuit d'arrivée d'eau froide (9) situé dans une chambre (8) au-dessus de la cuve (7).

3. Appareil selon la revendication 1 ou 2, caractérisé en ce que le premier échangeur (10) est constitué par des conduites (11) débouchant d'une part en partie basse (7a) de la cuve (7) vers un espace collecteur (12) des produits de combustion émanant du brûleur (13), et débouchant d'autre part en partie haute (7b) de la cuve (7) dans la chambre (8) en dessous d'un collecteur (15) de condensats (16) lui-même agencé en dessous du pré-échangeur (14) associé au circuit d'arrivée d'eau froide (9).

4. Appareil selon l'une des revendications 1 à 3, caractérisé en ce que l'échangeur (19) de production d'air chaud est constitué par une paroi à ailettes agencée concentriquement autour de la partie centrale (1) et formant avec celle-ci un premier passage annulaire (20) pour les produits de combustion émanant du brûleur (13), tandis qu'un deuxième passage annulaire (21) est formé entre cette paroi et l'enveloppe (2) pour l'air soufflé par au moins un ventilateur (5) monté dans ce deuxième passage.

5. Appareil selon la revendication 4, caractérisé en ce que la paroi précitée contient une certaine masse de liquide.

6. Appareil selon l'une des revendications 1 à 5, caractérisé en ce que les produits de combustion émanant du brûleur (13) sont guidés dans un conduit (23) débouchant dans l'espace collecteur (12) sous la cuve (7) et muni d'un volet (26) d'orientation des produits de combustion soit vers le premier échangeur (10), soit vers le premier passage (20).

7. Appareil selon l'une des revendications 1 à 6, caractérisé par une ouverture (27) ménagée en partie haute de la chambre (8) et par une deuxième ouverture (28) ménagée dans le premier passage (20), cette deuxième ouverture étant en alignement axial avec la première et se prolongeant par une cheminée (29) équipée d'au moins un ventilateur (30) d'extraction des produits de combustion passant au travers de la partie centrale (1) et du premier passage (20).

8. Appareil selon l'une des revendications 1 à 7, caractérisé en ce que le collecteur (15) des condensats dans la chambre (8) communique par une conduite d'évacuation (17) avec l'extérieur de l'appareil, de même qu'une autre conduite (32) d'évacuation des condensats communique avec le deuxième passage (21) en partie basse de l'enveloppe (2).

9. Appareil selon l'une des revendications 1 à 8, caractérisé en ce que le circuit d'arrivée d'eau froide (9) débouche dans la cuve (7) qui comporte un aquastat (34) ainsi qu'une conduite (18) de départ d'eau chaude sanitaire.

## Patentansprüche

1. Gerät zur Erzeugung von Warmluft und von Sanitärwarmwasser, derjenigen Gattung, die wenigstens einen Brenner (13), der die Erwärmung von eine Ummantelung (2) durchströmender Warmluft und/oder das Wiedererwärmen des Wassers mit den Verbrennungsprodukten des Brenners (13) durchführt, aufweist, dadurch gekennzeichnet, dass es einen von der Ummantelung (2) wärmeisolierten und für das Sanitärwasser belegten unabhängigen mittleren Teil (1) umfasst, wobei dieser mittlere Teil einerseits wenigstens einen mit den Verbrennungsprodukten des im unteren Teil der Ummantelung (2) liegenden Brenners in Verbindung stehenden Tauscher (10, 14) enthält und andererseits mit der Ummantelung (2) einen Ringraum (3) begrenzt, der den mittleren Teil (1) vollständig und in thermisch unabhängiger Weise umgibt, mit dem besagten Brenner (13) verbunden ist und wenigstens einen Tauscher (19) zur Erzeugung von Warmluft enthält.

2. Gerät nach Anspruch 1, dadurch gekennzeichnet, dass der mittlere Teil (1) einen ersten, einen Sanitärwasservorratsbehälter (7) durchsetzenden Tauscher (10) und einen in einem in einer Kammer (8) oberhalb des Behälters (7) liegenden Kaltwasserzufuhrkreislauf angeordneten Vortauscher (14) aufweist.

3. Gerät nach Anspruch 1 oder 2, dadurch gekennzeichnet, dass der erste Tauscher (10) aus Leitungen (11) besteht, die einerseits am unteren Teil (7a) des Behälters (7) zu einem die von dem Brenner (13) herkommenden Verbrennungsprodukte sammelden Raum (12) hin münden und andererseits am oberen Teil (7b) des Behälters (7) in eine Kammer (8) unterhalb eines Sammlers (15) für Kondensate (16), der selber unterhalb des dem Kaltwasserzufuhrkreislauf (9) zugeordneten Vortauschers (14) angeordnet ist, münden.

4. Gerät nach einem der Ansprüche 1 bis 3, dadurch gekennzeichnet, dass der Tauscher (19) zur Warmlufterzeugung durch eine konzentrisch um den mittleren Teil (1) herum angeordnete und mit diesem einen ersten ringförmigen Durchgang (20) für die aus dem Brenner (13) herrührenden Verbrennungsprodukte bildende Rippenwandung gebildet ist, während ein zweiter ringförmiger Durchgang (21) zwischen dieser Wandung und der Ummantelung (2) für die durch wenigstens ein in diesem zweiten Durchgang angeordnetes Gebläse (5) geblasene Luft gebildet wird.

5. Gerät nach Anspruch 4, dadurch gekennzeichnet, dass die vorgenannte Wandung eine bestimmte Flüssigkeitsmasse enthält.

6. Gerät nach einem der Ansprüche 1 bis 5, dadurch gekennzeichnet, dass die von dem Brenner (13) herkommenden Verbrennungsprodukte in einer Leitung (23) geführt werden, welche in den Sammelraum (12) unterhalb des Behälters (7) mündet und mit einer Klappe (26) zur Lenkung der Verbrennungsprodukte entweder zu dem ersten Tauscher (10) oder zu dem ersten Durchgang (20) hin versehen ist.

7. Gerät nach einem der Ansprüche 1 bis 6, gekennzeichnet durch eine im oberen Teil der Kammer (8) gebildete Öffnung (27) und durch eine in dem ersten Durchgang (20) gebildete zweite Öffnung (28), wobei diese zweite Öffnung mit der Ersten axial fluchtet und sich durch einen Schacht (29) fortsetzt, der mit wenigstens einem Gebläse (30) zum Abzug der den mittleren Teil (1) und den ersten Durchgang (20) durchströmenden Verbrennungsprodukte ausgestattet ist.

8. Gerät nach einem der Ansprüche 1 bis 7, dadurch gekennzeichnet, dass der Sammler (15) für die Kondensate in der Kammer (8) über eine Abfuhrleitung (17) mit der Aussenseite des Geräts in Verbindung steht und ebenfalls eine andere Leitung (32) zur Abfuhr der Kondensate mit dem zweiten Durchgang (21) am unteren Teil der Ummantelung (2) in Verbindung steht.

9. Gerät nach einem der Ansprüche 1 bis 8, dadurch gekennzeichnet, dass der Kaltwasserzufuhrkreislauf (9) in den Behälter (7) einmündet, der einen Wassertemperaturregler (34) sowie eine Sanitärwarmwasserabgangsleitung (18) aufweist.

## Claims

1. Apparatus for the production of hot air and of hot sanitary water, of the type comprising at least one burner (13) performing the heating of ventilated air passing through an envelope (2) and/or the reheating of the water through thermal exchange with the combustion products of the burner (13), characterized in that it comprises an independent central portion (1) thermally insulated from the envelope (2) and reserved for the sanitary water, this central portion on the one hand containing at least one exchanger (10, 14) in communication with the combustion products of the burner located in the lower part of the envelope (2) and, on the other hand, defining with the envelope (2) an annular space (3) which completely surrounds in a thermally independent manner the central portion (1), which is connected to the said burner (13) and which contains at least one exchanger (19) for the production of hot air.

2. Apparatus according to Claim 1, characterized in that the central portion (1) comprises a first exchanger (10) extending through a tank (7) for the storage of the sanitary water and a pre-exchanger (14) disposed on a cold water supply circuit (9) located in a chamber (8) above the tank (7).

3. Apparatus according to Claim 1 or 2, characterized in that the first exchanger (10) is constituted by ducts (11) opening on the one hand at the lower part (7a) of the tank (7) towards a space (12) collecting the combustion products coming from the burner (18) and opening, on the other hand, at the upper portion (7b) of the tank (7) into the chamber (8) below a collector (15) for condensates (16) itself arranged underneath the pre-exchanger (14) associated with the cold water supply circuit (9).

4. Apparatus according to one of Claims 1 to 3, characterized in that the hot air production exchanger (19) is constituted by a finned wall arranged concentrically about the central portion (1) and forming with the latter a first annular passage-way (20) for the combustion products coming from the burner (13) whereas a second annular passage-way (21) is formed between this wall and the envelope (2) for the air blown by at least one fan (5) mounted in this second passage-way.

5. Apparatus according to Claim 4, characterized in that the aforesaid wall contains a certain mass of liquid.

6. Apparatus according to one of Claims 1 to 5, characterized in that the combustion products coming from the burner (13) are guided in a duct (23) opening into the collector space (12) below the tank (7) and provided with a flap (26) for the orientation of the combustion products either towards the first exchanger (10) or towards the first passage-way (20).

7. Apparatus according to one of Claims 1 to 6, characterized by an opening (27) arranged at the upper part of the chamber (8) and by a second opening (28) arranged in the first passage-way (20), this second opening being in axial alignment with the first one and being extended by a chimney (29) fitted with at least one fan (30) for the extraction of the combustion products passing through the central portion (1) and through the first passage-way (20).

8. Apparatus according to one of Claims 1 to 7, characterized in that the collector (15) for the condensates in the chamber (8) communicates through a discharge duct (17) with the outside of the apparatus and, likewise, another duct (32) for the discharge of the condensates communicates with the second passage-way (21) at the lower part of the envelope (2).

9. Apparatus according to one of Claims 1 to 8, characterized in that the cold water supply circuit (9) opens into the tank (7) which comprises an aquastat (34) as well as a hot sanitary water delivery duct (18).